# EUROPÄISCHE PATENTSCHRIFT

(11) **EP 0 426 699 B1**
(45) Veröffentlichungstag und Bekanntmachung des Hinweises auf die Patenterteilung: **10.03.1993**
(21) Anmeldenummer: 89907673.1
(22) Anmeldetag: 15.07.1989
(51) Int. Cl.: G01N 27/406

(54) **ELEKTROCHEMISCHER MESSFÜHLER**
ELECTROCHEMICAL MEASUREMENT PROBE
CAPTEUR ELECTROCHIMIQUE DE MESURE

(30) Priorität: 23.07.1988 DE 3825139
(43) Veröffentlichungstag der Anmeldung: 15.05.1991
(73) Patentinhaber: ROBERT BOSCH GMBH, 70442 Stuttgart (DE)
(72) Erfinder: HOETZEL, Gerhard, D-7000 Stuttgart 50 (DE)
(86) Internationale Anmeldenummer: DE8900472
(87) Internationale Veröffentlichungsnummer: WO9001162

(56) Entgegenhaltungen:
- EP-A- 0 148 622
- DE-A- 3 606 044
- GB-A- 2 187 842
- US-A- 4 505 807
- US-A- 4 683 049

## Beschreibung

### Stand der Technik

Die Erfindung geht aus von einem elektrochemischen Meßfühler nach dem Oberbegriff des Hauptanspruchs (siehe z.B. US-A-45 05 807).

Elektrochemische Meßfühler für die Bestimmung des Sauerstoffgehaltes von Gasen, insbesondere von Abgasen von Brennkraftmaschinen, mit einem metallischen Gehäuse,in dessen Längsbohrung ein im wesentlichen plättchenförmiges Sensorelement in Längsrichtung fest und dicht eingebaut ist, daß eines seiner Enden im Bereich der meßgasseitigen Öffnung des Gehäuses liegt, wobei das Sensorelement mit mindestens einer seiner zwei im Abstand voneinander auf einem Sauerstoffionen leitenden Festelektrolyten angeordneten, porösen schichtförmigen Elektroden dem Meßgas ausgesetzt ist, sind aus der DE-OS 29 37 048 und der DE-OS 30 17 947 bekannt.

Kennzeichnend für diese elektrochemischen Meßfühler, die auch als Lambda-Sonden bezeichnet werden, ist, daß ihr eingebautes Sensorelement aus einer elektrochemischen Sauerstoffkonzentrationszelle (Nernstzelle) besteht, die versetzt in zwei Räumen entweder dem Abgas oder der Luft ausgesetzt ist. Sie eignen sich nicht zur Bestimmung des Luft/Kraftstoff-Verhältnisses in Abgasen von Brennkraftmaschinen sowohl im kraftstoffarmen als auch im kraftstoffreichen Gebiet.

Aus der US-PS 4 568 443 und der DE-PS 36 06 044 sind ferner elektrochemische Meßfühler bekannt, die außer einer elektrochemischen Sauerstoffkonzentrationszelle noch eine Sauerstoffpumpzelle aufweisen und infolgedessen das Luft/Kraftstoff-Verhältnis eines Luft/Kraftstoffgemisches über den gesamten Betriebsbereich der Verbrennungseinheit, einschließlich des Magerbereiches bis zu einem Anreicherungsbereich zu bestimmen oder zu messen vermögen.

Nachteilig an den zuletzt genannten elektrochemischen Meßfühlern ist, daß sie jeweils 2 Luftreferenzkammern benötigen und ihr Aufbau vergleichsweise kompliziert und aufwendig ist.

### Vorteile der Erfindung

Der erfindungsgemäße elektrochemische Meßfühler mit den Merkmalen des Hauptanspruches hat demgegenüber wesentliche Vorteile. So weist das Sensorelement des Meßfühlers einen besonders einfachen Aufbau auf, d. h. zu seiner Herstellung sind im einfachsten Falle nur 2 Festelektrolyt- oder Keramikfolien erforderlich. Der Sauerstoffpumpzelle steht sowohl im mageren als auch im fetten Lambda-Bereich freier Sauerstoff zur Verfügung, d. h. eine H₂O- bzw. CO₂-Zersetzung zur Erzeugung von O₂-Ionen im Fettbereich ist nicht erforderlich. Die Elektroden der Sauerstoffpumpzelle sind in Längsrichtung groß dimensionierbar, weshalb nur vergleichsweise kleine Stromdichten erforderlich sind. Ferner erfolgt keine starke Abkühlung des Sensorelementes im Bereich der Elektroden durch kaltes Meßgas, da die Elektroden außerhalb des durchströmten Abgasrohres liegen und mit dem zu messenden Abgas nur über den Gasdiffusionsspalt kommunizieren, nach Art eines extrem kurzen "Bypass".

### Zeichnung

Die Zeichnung dient der näheren Erläuterung der Erfindung.

Im einzelnen sind dargestellt in:
Fig. 1: Der Aufbau eines Sensorelements eines erfindungsgemäßen elektrochemischen Meßfühlers;
Fig. 2: Das Sensorelement von Fig. 1 im Schnitt gemäß Schnitt-linie A - A;
Fig. 3: Das Layout einer ersten Ausführungsform eines Sensorelementes eines erfindungsgemäßen elektrochemischen Meßfühlers ohne integrierten Heizer;
Fig. 4: Das Layout einer zweiten Ausführungsform eines Sensorelementes eines erfindungsgemäßen elektrochemischen Meßfühlers mit integriertem Heizer;
Fig. 5: Ein elektrochemischer Meßfühler nach der Erfindung im Schnitt.

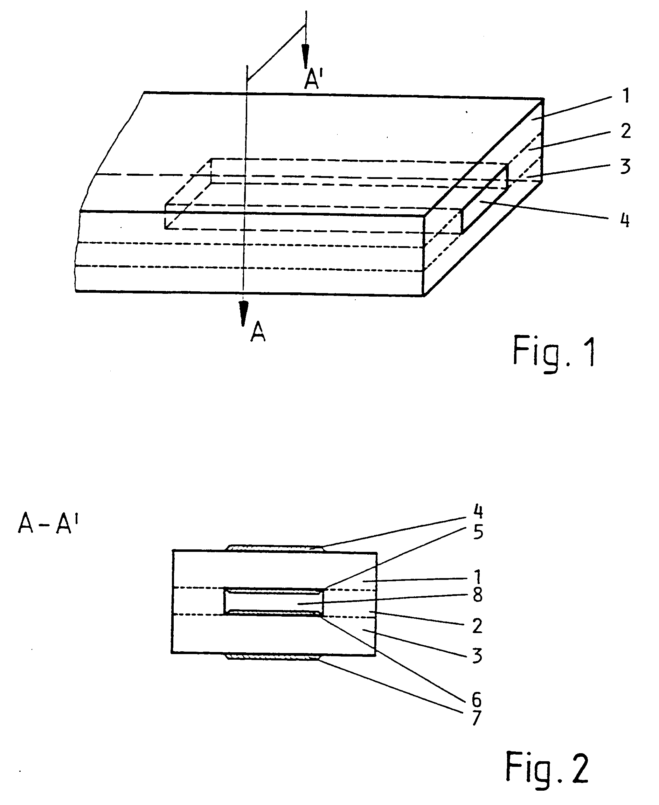

Die Figuren 1 und 2 veranschaulichen den Aufbau einer vorteilhaften Ausführungsform eines Sensorelementes eines erfindungsgemäßen elektrochemischen Meßfühlers. Das Sensorelement besteht aus den Festelektrolytfolien 1, 2 und 3, den Elektroden 4 und 5 der Sauerstoffpumpzelle (Pumpelektroden) und den Elektroden 6 und 7 der elektrochemischen Sauerstoffkonzentrationszelle (Sensorelektroden).

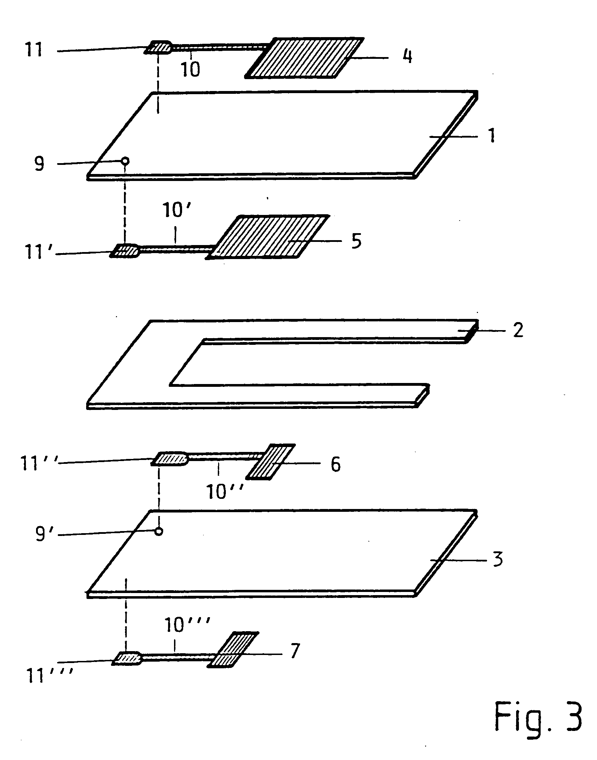

Die Festelektrolytfolie 2 weist einen ausgestanzten Diffusionskanal 8 auf. Der besseren- Übersicht wegen sind in Fig. 1 die Elektroden nicht mit eingezeichnet worden. Gemäß dem in Fig. 3 dargestellten Layout einer ersten vorteilhaften Ausführungsform eines Sensorelementes eines erfindungsgemäßen elektrochemischen Meßfühlers erfolgt die Herstellung des Sensorelementes durch Zusammenlaminieren der Festelektrolytfolien 1, 2 und 3. Vor dem Zusammenlaminieren der Folien wird aus der Folie 1 das Durchkontaktierungsloch 9 ausgestanzt. Ferner werden auf die Folie 1 die äußere Pumpelektrode 4 nebst Leiterbahn 10 und Anschluß 11 sowie die innere Pumpelektrode 5 nebst Leiterbahn 10′ und Anschluß 11′ aufgedruckt. In entsprechender Weise wird aus der Folie 3 das Durchkontaktierungsloch 9′ ausgestanzt. Ferner werden auf die Folie 3 die innere Sensorelektrode 6 nebst Leiterbahn 10˝ und Anschluß 11˝ sowie die äußere Sensorelektrode 7 nebst Leiterbahn 10˝ und Anschluß 11˝′ aufgedruckt. Im Falle dieser ersten Ausführungsform ist der Heizer weggelassen worden, da die Position desselben nicht kritisch ist.

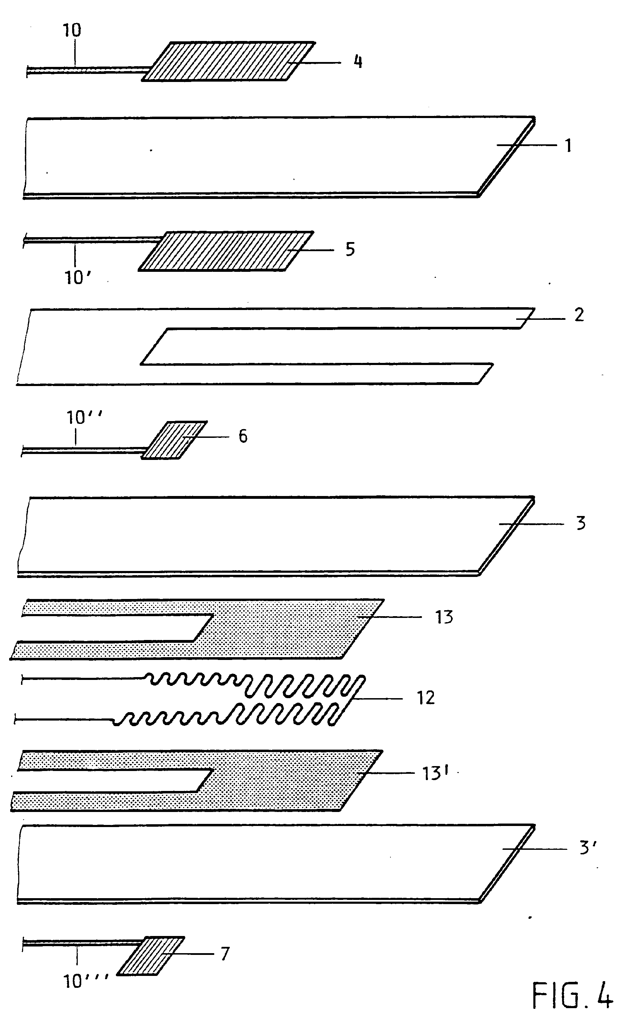

Die in Fig. 4 dargestellte zweite Ausführungsform eines Sensorelementes eines erfindungsgemäßen elektrochemischen Meßfühlers unterscheidet sich von der in Fig. 3 dargestellten Ausführungsform im wesentlichen durch die Anordnung eines Heizers 12, der im Falle der dargestellten Ausführungsform zwischen den Folien 3 und 3′ untergebracht ist und durch die Isolierungen 13, 13′ gegenüber den Folien 3 und 3′ isoliert ist. Im Falle dieser vorteilhaften Ausgestaltung eines Sensorelementes eines erfindungsgemäßen Meßfühlers erfolgt die Herstellung des Sensorelementes somit durch Zusammenlaminieren der Folien 1, 2, 3 und 3′, wobei auf die Folien 3 und 3′ außer den Elektroden, Leiterbahnen und Anschlüssen zusätzlich noch die Isolierungen 13, 13′ und der Heizer 12 aufgedruckt werden.

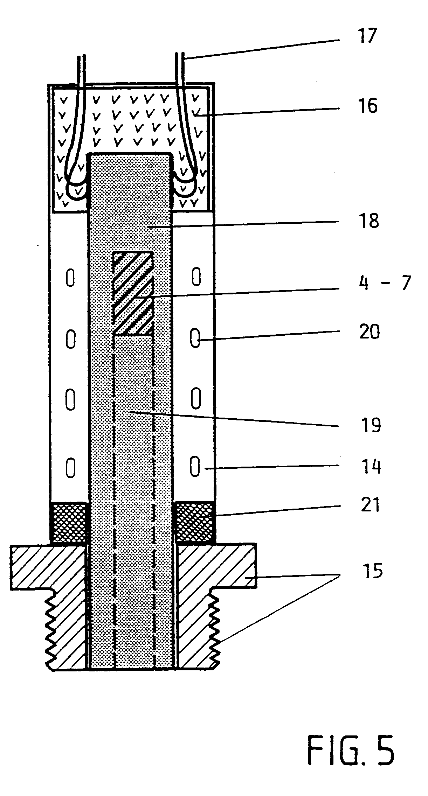

Die in Fig. 5 dargestellte beispielsweise Ausführungsform eines erfindungsgemäßen elektrochemischen Meßfühlers besteht im wesentlichen aus einem metallischen Gehäuse 14, dessen eines Ende einen 6-Kant und ein Gewinde 15 zum Einschrauben in den Abgaskanal und dessen anderes Ende einen Keramikstecker 16 mit Kontaktfedern 17 aufweist. In die Längsbohrung des Gehäuses ist das Sensorelement mit den Elektroden 4 - 7 eingepaßt. Der Zutritt von Meßgas zu den Elektroden erfolgt über den Gasdiffusionsspalt 19 und der Zutritt von Luft über die Luftzuführöffnungen 20. Die Dichtung 21 dichtet den Referenzluftraum vom Abgasraum ab. Gehäuseaufbau und Anordnung des Sensorelementes im Gehäuse sind jedoch nicht kritisch.

Zur Herstellung der Sensorelemente der erfindungsgemäßen elektrochemischen Meßfühler eignen sich bekannte O²-Ionen leitende Festelektrolytfolien auf Basis von Oxiden vierwertiger Metalle, wie insbesondere ZrO₂, CeO₂, HfO₂ und ThO₂ mit einem Gehalt an zweiwertigen Erdalkalioxiden und/oder vorzugsweise dreiwertigen Oxiden der seltenen Erden. In typischer Weise können die Folien zu etwa 50 bis 97 Mol-% aus ZrO₂,CeO₂, HfO₂ oder ThO₂ und zu 50 bis 3 Mol-% aus CaO, MgO oder SrO und/oder Oxiden der seltenen Erden und insbesondere Y₂O₃ bestehen. In vorteilhafter Weise bestehen die Festelektrolytfolien aus mit Y₂O₃ stabilisiertem ZrO₂. In zweckmäßiger Weise liegt die Dicke der verwendeten Folien bei 0,1 bis 0,6 mm.

Die Elektroden, die dazugehörigen Leiterbahnen und Anschlüsse können in üblicher bekannter Weise ausgehend von bekannten Pasten auf Edelmetallbasis, insbesondere Platin-Cermetbasis auf die gegebenenfalls partiell mit einer isolierenden Schicht versehenen Festelektrolytfolien aufgedruckt werden.

In vorteilhafter Weise sind die Elektroden der Sauerstoffpumpzelle des Sensorlementes großflächiger als die Elektroden der Sauerstoffkonzentrationszelle ausgebildet. Dies bedeutet, daß die Fläche der Elektroden der Sauerstoffpumpzelle in vorteilhafter Weise um 10 bis 500 % größer sein kann, als die Fläche der Elektroden der Sauerstoffkonzentrationszelle.

Die Isolierung der Heizerleiterbahnen gegenüber den Festelektrolytfolien kann z. B. mittels üblich bekannter Isolierungen z. B. auf Al₂O₃-Basis erfolgen.

Die Durchkontraktierung der Festelektrolytfolien kann ebenfalls nach üblichen bekannten Methoden erfolgen.

Im Falle der in den Zeichnungen dargestellten vorteilhaften Ausführungsformen von Sensorelementen erfindungsgemäßer elektrochemischer Meßfühler wird der Diffusionskanal durch Verwendung einer Festelektrolytfolie gebildet, aus der der Diffusionskanal ausgestanzt worden ist. Die Verwendung einer solchen Folie ist jedoch nicht erforderlich. Vielmehr ist es auch möglich, den Diffusionskanal in anderer Weise zu erzeugen. So können gemäß einer weiteren vorteilhaften Ausgestaltung der Erfindung zum Aufbau des Sensorelementes auch nur zwei Festelektrolytfolien verwendet werden, die in dem den Diffusionskanal bildenden Bereich zuvor mit einer verbrennbaren, zersetzbaren oder verdampfbaren Substanz, wie z. B. Theobromin, Indanthrenblau, Ruß oder dgl. bedruckt worden sind. In diesem Fall wird der Diffusionskanal durch Erhitzen des Folienlaminats auf eine zur Verbrennung, Zersetzung bzw. Verdampfung der verwendeten Substanz erforderliche Temperatur erzeugt. In vorteilhafter Weise kann sich diese Verfahrensstufe an das Zusammenlaminieren der Folien anschließen oder mit dem Zusammenlaminieren kombiniert werden.

Das Aufdrucken derartiger Substanzen wie auch das Aufdrucken der Elektroden, Leiterbahnen und Elektrodenanschlüsse kann nach üblichen bekannten Methoden, z. B. nach dem Siebdruckverfahren erfolgen.

Das Zusammenlaminieren der Festelektrolytfolien der Sensorelemente der erfindungsgemäßen elektrochemischen Meßfühler erfolgt ebenfalls nach üblichen bekannten Methoden unter Verwendung üblicher bekannter interlaminarer Binder.

## Patentansprüche

1. Elektrochemischer Meßfühler für die Bestimmung der Luft/Kraftstoff-Verhältnisse in Abgasen von Brennkraftmaschinen sowohl im kraftstoffarmen als auch im kraftstoffreichen Gebiet mit einem Sensorelement mit einer elektrochemischen Sauerstoffkonzentrationszelle und einer Sauerstoffpumpzelle auf Festelektrolytbasis, die einander unter Ausbildung eines Zwischenraumes gegenüberstehen, der einen mit dem zu untersuchenden Abgas kommunizierenden Gasdiffusionsspalt bildet, wobei das Sensorelement in einem in das Abgasrohr einsetzbaren Gehäuse angeordnet ist, dadurch gekennzeichnet, daß sich die Elektroden (4, 5) der Sauerstoffpumpzelle und die Elektroden (6, 7) der elektrochemischen Sauerstoffkonzentrationszelle des Sensorelementes im Meßfühler außerhalb das Abgasrohres befinden, die Kommunikation mit der Atmosphäre über Öffnungen (20) im Gehäuse (14) und die Kommunikation mit dem Abgas über den Diffusionsspalt (19) erfolgt.

2. Elektrochemischer Meßfühler nach Anspruch 1, dadurch gekennzeichnet, daß die Sauerstoffkonzentrationszelle und die Sauerstoffpumpzelle des Sensorelementes aus jeweils einer Festelektrolytfolie (1,3) mit beidseitig in Dickschichttechnik aufgedruckten Elektroden (4,5 bzw. 6,7) bestehen.

3. Elektrochemischer Meßfühler nach Ansprüchen 1 und 2, dadurch gekennzeichnet, daß die Elektroden (4, 5) der Sauerstoffpumpzelle großflächiger als die Elektroden (6, 7) der Sauerstoffkonzentrationszelle ausgestaltet sind.

4. Elektrochemischer Meßfühler nach Anspruch 2, dadurch gekennzeichnet, daß die beiden Festelektrolytfolien (1, 3) durch eine weitere Festelektrolytfolie (2) mit ausgestanztem Diffusionskanal (8) voneinander getrennt sind.

5. Elektrochemischer Meßfühler nach einem der Ansprüche 1 bis 4, dadurch gekennzeichnet, daß das Sensorelement einen gegenüber den Festelektrolytfolien isolierten Heizer (12) aufweist.

6. Elektrochemischer Meßfühler nach einem der Ansprüche 1 bis 5, dadurch gekennzeichnet, daß das Meßfühlergehäuse (14) einen Schlüsselsechskant mit einem Außengewinde (15) aufweist.

7. Elektrochemischer Meßfühler nach einem der Ansprüche 1 bis 6, dadurch gekennzeichnet, daß die elektrische Versorgung des Sensorelementes über einen Keramikstecker (16) mit Kontaktfedern (17) erfolgt.

## Claims

1. Electrochemical measuring sensor for the determination of the air/fuel ratio in exhaust gases of internal combustion engines both in the low-fuel and also in the fuel-rich range with a sensor element with an electrochemical oxygen concentration cell and an oxygen pumping cell with solid electrolyte base which are situated opposite each other to form an intermediate space which forms a gas diffusion slit communicating with the exhaust gas to be analysed, the sensor element being arranged in a housing, capable of insertion in the exhaust gas pipe, characterised in that the electrodes (4, 5) of the oxygen pumping cell and the electrodes (6, 7) of the electrochemical oxygen concentration cell of the sensor element in the measuring sensor are situated outside the exhaust gas pipe, the communication with the atmosphere takes place via openings (20) in the housing (14) and the communication with the exhaust gas takes place via the diffusion slit (19).

2. Electrochemical measuring sensor according to Claim 1, characterised in that the oxygen concentration cell and the oxygen pumping cell of the sensor element are each composed of a solid electrolyte sheet (1, 3) with electrodes (4, 5 or 6, 7 respectively) printed on both sides by thick-film technology.

3. Electrochemical measuring sensor according to Claims 1 and 2, characterised in that the electrodes (4, 5) of the oxygen pumping cell are formed with a larger area than the electrodes (6, 7) of the oxygen concentration cell.

4. Electrochemical measuring sensor according to Claim 2, characterised in that the two solid electrolyte sheets (1, 3) are separated from one another by a further solid electrolyte sheet (2) with punched-out diffusion channel (8).

5. Electrochemical measuring sensor according to one of Claims 1 to 4, characterised in that the sensor element has a heater (12) insulated from the solid electrolyte sheets.

6. Electrochemical measuring sensor according to one of Claims 1 to 5, characterised in that the measuring sensor housing (14) has a spanner hexagon with an external thread (15).

7. Electrochemical measuring sensor according to one of Claims 1 to 6, characterised in that the electrical supply of the sensor element takes place via a ceramic plug (16) with contact springs (17).

## Revendications

1. Capteur électrochimique de mesure pour la détermination des rapports air/carburant dans les gaz d'échappement de moteurs à combustion interne, pour des mélanges pauvres comme pour des mélanges riches, au moyen d'un élément sensible comportant une cellule électrochimique de concentration d'oxygène et une cellule de pompage d'oxygène à base d'électrolyte solide, disposées de manière à ménager entre elles un espace intermédiaire constituant une fente de diffusion communiquant avec le gaz d'échappement objet de la mesure, l'élément sensible étant monté à l'intérieur d'un boîtier que l'on peut introduire dans le tube où circulent les gaz d'échappement, capteur caractérisé en ce que les électrodes (4, 5) de la cellule de pompage d'oxygène et les électrodes (6, 7) de la cellule électrochimique de concentration d'oxygène de l'élément sensible sont placées dans le capteur de mesure à l'écart du tube de circulation des gaz d'échappement, la communication avec l'air atmosphérique étant assurée par des ouvertures (20) du boîtier (14), tandis que la communication avec les gaz d'échappement s'effectue à travers la fente de diffusion (19).

2. Capteur électrochimique de mesure selon la revendication 1, caractérisé en ce que la cellule de concentration d'oxygène et la cellule de pompage d'oxygène de l'élément sensible sont constituées chacune d'une lamelle d'électrolyte solide (1, 3) sur laquelle sont déposées par impression, respectivement d'un côté et de l'autre, les électrodes (4, 5, d'une part, 6, 7, d'autre part).

3. Capteur électrochimique de mesure selon les revendications 1 et 2, caractérisé en ce que les électrodes (4, 5) de la cellule de pompage d'oxygène, ont une surface supérieure à celle des électrodes (6, 7) de la cellule de concentration d'oxygène.

4. Capteur électrochimique de mesure selon la revendication 2, caractérisé en ce que les deux lamelles (1, 3) d'électrolyte solide sont séparées l'une de l'autre par une autre lamelle (2) d'électrolyte solide dans laquelle est découpé un canal de diffusion (8).

5. Capteur électrochimique de mesure selon l'une des revendications 1 à 4, caractérisé en ce que l'élément sensible est équipé d'un filament chauffant (12) isolé des lamelles d'électrolyte solide.

6. Capteur électrochimique de mesure selon l'une des revendications 1 à 5, caractérisé en ce que le boîtier (14) du capteur est muni d'un écrou à six pans avec filetage externe (15).

7. Capteur électrochimique de mesure selon l'une des revendications 1 à 6, caractérisé en ce que l'alimentation en électricité de l'élément sensible est assurée par un connecteur en céramique (16) muni de ressorts de contact (17).
